# FASCICULE DE BREVET EUROPEEN

(11) **EP 2 257 765 B1**
(45) Date de publication et mention de la délivrance du brevet: **31.08.2011**
(21) Numéro de dépôt: 09726311.5
(22) Date de dépôt: 11.03.2009
(51) Int. Cl.: G01C 19/58, G01C 21/10, G01P 15/08, G01V 7/14, G21K 1/00

(54) **CAPTEUR INTERFEROMETRIQUE A ATOMES FROIDS**
SENSOR ZUR INTERFEROMETRIE AN KALTEN ATOMEN
COLD ATOM INTERFEROMETRY SENSOR

(30) Priorité: 12.03.2008 FR 0851599
(43) Date de publication de la demande: 08.12.2010
(73) Titulaire: Centre National de la Recherche Scientifique - CNRS, 75794 Paris Cedex 16 (FR); Observatoire de Paris, 75014 Paris (FR)
(72) Inventeur: BOUYER, Philippe, F-91140 Bures sur Yvette (FR); LANDRAGIN, Arnaud, F-91400 Orsay (FR)
(74) Mandataire: Giovannini, Francesca
(86) Numéro de dépôt international: PCT/FR2009/000252
(87) Numéro de publication internationale: WO 2009/118488

(56) Documents cités:
- FR-A- 2 848 296
- US-A- 5 274 232
- J.M. MCGUIRK, G.T. FOSTER, J.B. FIXLER, M.J. SNADDEN, M.A. KASEVICH: "Sensitive absolute-gravity gradiometry using atom interferometry" PHYSICAL REVIEW A, vol. 65, 8 février 2002 (2002-02-08), pages 033608-1-033608-14, XP002500113 DOI: 10.1103/PhysRevA.65.033608
- YU N ET AL: "Development of an atom-interferometer gravity gradiometer for gravity measurement from space" APPLIED PHYSICS B ; LASERS AND OPTICS, SPRINGER, BERLIN, DE, vol. 84, no. 4, 18 juillet 2006 (2006-07-18), pages 647-652, XP019424639 ISSN: 1432-0649
- LEE K I ET AL: "SINGLE-BEAM ATOM TRAP IN A PYRAMIDAL AND CONICAL HOLLOW MIRROR" OPTICS LETTERS, OSA, OPTICAL SOCIETY OF AMERICA, WASHINGTON, DC, US, vol. 21, no. 15, 1 août 1996 (1996-08-01), pages 1177-1179, XP000622112 ISSN: 0146-9592 cité dans la demande

## Description

L'invention se rapporte à un capteur interférométrique à atomes froids.

Le principe de fonctionnement d'un tel capteur interférométrique à atomes froids utilisant les transitions Raman stimulées est notamment décrit dans la demande US 5,274,232. Ces capteurs interférométriques à atomes froids sont connus pour avoir une grande sensibilité.

Dans un tel capteur, il est nécessaire d'obtenir deux faisceaux laser de fréquences différentes se propageant dans des directions différentes pour obtenir des franges d'interférence atomiques à partir du lancement d'une source d'atomes refroidis.

Pour obtenir ces deux faisceaux lasers nécessaires aux impulsions Raman, on peut soit utiliser deux sources laser distinctes par exemple contrapropagatives, soit utiliser une seule source générant un premier faisceau laser bifréquence et un réflecteur agencé pour réfléchir le faisceau laser de sorte à générer un deuxième faisceau laser bifréquence.

Ce deuxième type de capteur utilisant une seule source laser et un réflecteur pour générer les deux faisceaux laser à impulsions Raman ont l'avantage d'avoir de bonnes performances puisque les aberrations relatives entre les deux faisceaux Raman sont réduites. Un tel capteur interférométrique utilisant un réflecteur pour générer le deuxième faisceau bifréquence Raman est par exemple décrit dans la demande FR-A-2848296.

Pour améliorer la stabilité de la mesure fournie par le capteur interférométrique, il est nécessaire de réduire la dispersion en vitesse d'une source atomique en refroidissant les atomes de sorte à obtenir des atomes froids. Pour ce faire, on utilise des moyens de capture agencés pour capturer les atomes issus de la source d'atomes de sorte à obtenir des atomes froids.

L'invention se rapporte plus particulièrement à un tel capteur interférométrique à atomes froids comprenant :
- une source d'atomes ;
- un laser bifréquence apte à générer un premier faisceau laser bifréquence Raman ;
- un réflecteur agencé pour réfléchir le premier faisceau laser bifréquence Raman de sorte à générer un deuxième faisceau laser bifréquence Raman, le premier faisceau laser et le deuxième faisceau laser se propageant dans des directions différentes pour obtenir des franges d'interférence atomiques à partir d'un lancement d'atomes froids obtenus à partir de la source d'atomes.

Un tel capteur interférométrique à atomes froids est par exemple décrit dans la thèse de doctorat intitulée « Caractérisation d'un capteur inertiel à atomes froids » de Florence YVER LEDUC, 2004 ou dans la publication « Six-Axis Inertial Sensor Using Cold-Atom Interferometry » ,B. Canuel, F. Leduc, D. Holleville, A. Gauguet, J. Fils, A. Virdis, A. Clairon, N. Dimarcq, Ch. J. Bordé, A. Landragin and P. Bouyer, Phys. Rev. Lett. 97, 010402 (2006) .

Dans ce document, et de façon classique, le capteur comprend des moyens de capture agencés pour capturer les atomes issus de la source d'atomes de sorte à obtenir des atomes froids. De façon également connue, ces moyens de capture comprennent un piège constitué de six lasers contrapropageants dans les trois directions de l'espace.

Un tel capteur interférométrique à atomes froids a donc l'inconvénient de nécessiter au moins un laser Raman pour les mesures d'interférence atomiques, et plusieurs lasers pour réaliser la capture d'atomes de sorte à obtenir les atomes froids permettant une bonne mesure interférométrique.

Il en résulte que les capteurs interférométrique à atomes froids de l'état de la technique sont complexes et peu compacts.

Le problème résolu par l'invention est de fournir un ou plusieurs capteurs interférométriques à atomes froids tel que décrit ci-dessus nécessitant moins de lasers de sorte à être plus compact, tout en permettant des mesures satisfaisantes.

Selon l'invention, ce problème est résolu en utilisant le réflecteur non plus uniquement pour sa fonction de génération du deuxième faisceau Raman, mais également pour former les moyens de capture permettant d'obtenir les atomes froids grâce à des réflexions multiples du premier faisceau Raman sur les surfaces du réflecteur.

Plus particulièrement, le problème mentionné ci-dessus est résolu par le fait que le réflecteur étant agencé en outre pour permettre des réflexions multiples du premier faisceau sur des surfaces du réflecteur de sorte que le premier faisceau et ses réflexions multiples permettent de capturer les atomes issus de la source d'atomes de manière à obtenir les atomes froids.

Ainsi, grâce à l'invention, les lasers contrapropageants formant, dans les dispositifs connus, les moyens de capture, ne sont plus nécessaires puisque c'est le premier faisceau laser lui-même qui, grâce à des réflexions multiples sur le réflecteur, assure la capture. Dès lors, le capteur interférométrique à atomes froids selon l'invention ne nécessite qu'une seule source laser pour réaliser à la fois les mesures interférométriques par transition Raman et la capture des atomes pour obtenir des atomes froids.

Dans le domaine des pièges permettant d'obtenir des atomes froids, on connaît la publication « Single-Beam atom trap in a pyramidal and conical hollow mirror », de Lee et al. Optics Letters Août 1996 qui enseigne qu'il est possible de piéger et de refroidir des atomes grâce à un réflecteur en n'utilisant qu'un seul laser. Toutefois, cette publication ne concerne pas le domaine des capteurs interférométriques à atomes froids et, en particulier, il n'est nullement mentionné que le réflecteur formant un piège atomique particulier décrit dans la publication puisse être utilisé en tant que réflecteur pour réfléchir le faisceau Raman d'un capteur interférométriques à atomes froids. Au contraire, selon l'invention, c'est bien le même réflecteur qui est utilisé pour réaliser la capture des atomes et la réflexion du faisceau laser Raman.

On décrit maintenant des modes de réalisation avantageux de l'invention.

On décrit d'abord des caractéristiques avantageuses du réflecteur mentionné ci-dessus.

Ce réflecteur peut être agencé de sorte que le premier faisceau et les réflexions du premier faisceau sur les surfaces du réflecteur constituent des paires de faisceaux contrapropageants pour capturer les atomes de sorte à obtenir les atomes froids. Dans ce cas, le réflecteur peut être agencé de sorte que le premier faisceau et les réflexions du premier faisceau sur les surfaces du réflecteur constituent trois paires de faisceaux contrapropageants. Cette caractéristique permet de réaliser une capture satisfaisante des atomes issus de la source d'atomes de manière à obtenir les atomes froids.

Le réflecteur peut être un réflecteur convexe pour que le premier faisceau et les réflexions du premier faisceau sur le réflecteur permettent de capturer les atomes dans le volume du réflecteur. Cette caractéristique du réflecteur permet que les réflexions du premier faisceau soient dirigées vers l'intérieur du réflecteur de sorte à assurer une bonne capture.

Le réflecteur peut notamment avoir une forme conique ou tronconique de sorte que le premier faisceau et les réflexions du premier faisceau sur le réflecteur permettent de capturer les atomes dans le volume formé par le réflecteur.

En particulier, le réflecteur peut avoir une forme pyramidale à section carrée ou pyramidale tronquée de sorte que le premier faisceau et les réflexions du premier faisceau sur les surfaces du réflecteur constituent trois paires de faisceaux contrapropageants pour capturer les atomes dans le volume formé par le réflecteur. Cette forme particulière du réflecteur permet alors d'assurer une bonne capture.

Le réflecteur peut être agencé pour que le deuxième faisceau laser se propage dans une direction opposée à la direction de propagation du premier faisceau et, de préférence, le réflecteur peut être agencé pour que le deuxième faisceau ait une polarisation identique à la polarisation du premier faisceau. Ceci permet de faciliter l'obtention de franges d'interférences atomiques.

Pour ce faire, le réflecteur peut avoir une forme tronconique ou pyramidale tronquée avec une surface plane perpendiculaire à la direction du premier faisceau, la surface plane étant traitée de sorte que le faisceau réfléchi sur la surface plane ait une polarisation identique à la polarisation du premier faisceau.

On décrit maintenant d'autres caractéristiques avantageuses du capteur selon l'invention.

La source d'atomes peut comprendre une puce atomique pourvue sur une des surfaces planes du réflecteur pour créer un nuage ultra-froid piégé magnétiquement. Cette caractéristique de la source d'atome améliore le piégeage des atomes et leur refroidissement.

Le capteur peut comprendre en outre des moyens magnétiques agencés pour piéger magnéto-optiquement les atomes froids, les moyens magnétiques étant agencés par rapport au réflecteur de sorte que les atomes froids soient piégés dans le volume du réflecteur.

Les moyens magnétiques peuvent être en outre agencés pour générer un champ magnétique constant de sorte à réaliser le lancement des atomes froids pour obtenir les franges d'interférence atomiques.

Le lancement des atomes froids pour obtenir les franges d'interférence atomiques est par exemple susceptible d'être réalisé par gravité.

La source d'atomes peut être apte à générer une vapeur d'atomes par au moins une des méthodes suivantes :
- la désorption par chaleur,
- la lumière ;
- le contrôle de la température d'un point froid.

De telles méthodes permettent une génération satisfaisante de vapeur d'atomes.

Le capteur comprend de préférence une enceinte sous vide, le réflecteur étant positionnés dans l'enceinte sous vide, et le capteur comprenant en outre des moyens de transmission agencés pour faire entrer le premier faisceau laser dans l'enceinte sous vide.

Dans ce cas, les moyens de transmission peuvent comprendre un hublot transparent au premier faisceau laser.

Le capteur peut comprendre en outre des moyens de détection agencés pour détecter les franges d'interférence atomiques.

Ces moyens de détection comprennent par exemple des cellules de photo-détection agencée pour détecter une fluorescence de résonance émise par les atomes froids.

L'invention se rapporte également à un système comprenant un premier capteur interférométrique tel que décrit précédemment, et un deuxième capteur interférométrique tel que décrit précédemment, le premier capteur comprenant un premier laser bifréquence Raman, le deuxième capteur comprenant un deuxième laser bifréquence Raman,

le faisceau laser généré par le premier laser du premier capteur ayant une direction de propagation différente de la direction de propagation du faisceau laser généré par le deuxième laser du deuxième capteur, le système comprenant en outre des moyens de détection positionnés à l'intersection des directions de propagation du faisceau laser généré par le premier laser et du faisceau laser généré par le deuxième laser.

Ce système peut comprendre en outre un troisième capteur interférométrique tel que décrit précédemment, le troisième capteur comprenant un troisième laser bifréquence Raman, le faisceau laser généré par le troisième laser du troisième capteur ayant une direction de propagation différente de la direction de propagation du faisceau laser généré par le deuxième laser du deuxième capteur et de la direction du faisceau laser généré par le deuxième laser du deuxième capteur, les moyens de détection étant positionnés à l'intersection des directions de propagation des faisceaux générés par le premier laser, le deuxième laser, et le troisième laser.

De la sorte, il est possible d'établir des séquences d'impulsions laser offrant un accès à plusieurs grandeurs inertielles successivement, notamment en accélération et en rotation.

On décrit maintenant des modes de réalisation détaillés de l'invention en référence aux figures annexées dans lesquelles :
- FIG. 1 représente une vue en coupe d'un capteur interférométrique à atomes froids selon un premier mode de réalisation de l'invention ;
- FIG. 2 est une vue détaillée d'une vue en coupe d'un réflecteur agencé pour réfléchir un faisceau Raman dans un capteur selon l'invention ;
- FIG. 3 est une vue en perspective d'un réflecteur agencé pour réfléchir un faisceau Raman dans un capteur selon l'invention ;
- FIG. 4 représente une vue en coupe d'un capteur interférométrique à atomes froids selon un mode de réalisation de l'invention ;
- FIG. 5 représente un réflecteur en forme de pyramide tronqué pourvu d'une puce à atomes utilisé dans un mode de réalisation d'un capteur interférométrique à atomes froids selon un mode de réalisation de l'invention ;
- FIG. 6 représente un système multi-axes comprenant deux capteurs interférométriques couplés orthogonaux selon l'invention.

Sur les figures, des références identiques se rapportent, sauf indication contraire, à des éléments techniques similaires.

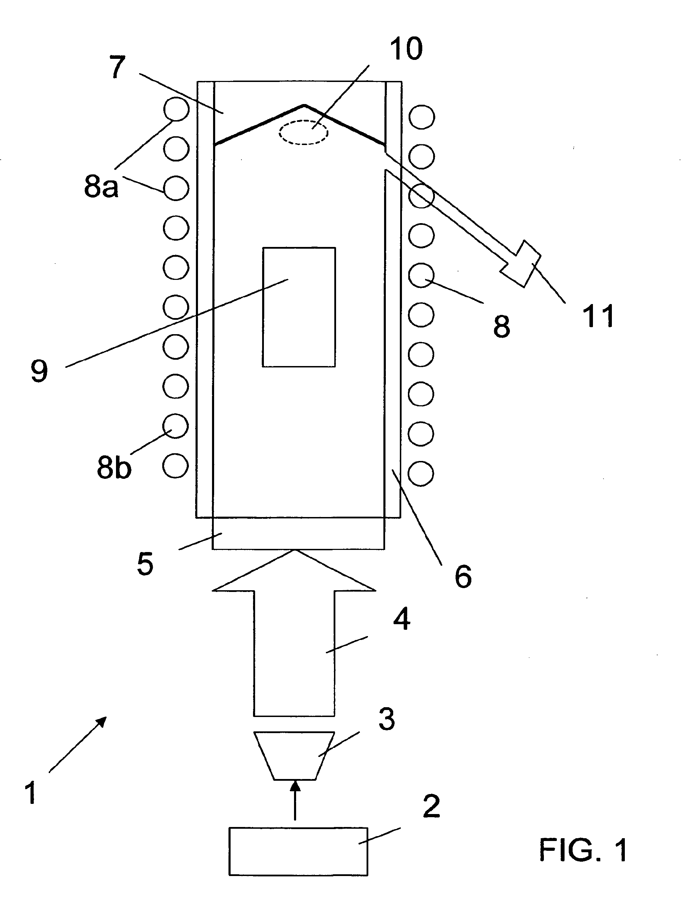

Comme illustré FIG. 1, un capteur interférométrique 1 selon l'invention comprend une source d'atomes 11, sous la forme d'un réservoir solide chauffé et contrôlé en température ou d'un dispenser. La source d'atome est agencée pour permettre d'obtenir une vapeur d'atome dans une enceinte à vide 6, soit par désorption de chaleur à l'aide d'un dispenser, soit par lumière avec une technique du type LIAD, soit encore en contrôlant la température d'un point froid. L'enceinte à vide 6 comprend un tube de verre dont la section peut être carrée ou circulaire. L'enceinte à vide 6 est fermée à une extrémité par un hublot 5 et à l'autre extrémité par un réflecteur convexe 7 qui sera décrit plus en détail par la suite. Le réflecteur 7 a de préférence une forme pyramidale, la base de la pyramide mesurant entre un centimètre et cinq centimètres. Afin de réduire l'effet des vibrations auxquelles le capteur 1 peut être soumis, le réflecteur 7 peut éventuellement être fixé à un système de stabilisation comprenant par exemple un accéléromètre bas niveau pour la lecture du bruit.

Le capteur interférométrique 1 comprend en outre une source laser 2 bifréquence et un système de mise en forme 3 du signal laser généré par la source 2. La source laser 2 bifréquence et le système de mise en forme 3 sont agencés l'un par rapport à l'autre de façon connue en soi de sorte à générer un premier faisceau laser 4 pénétrant par le hublot 5 avec des caractéristiques de taille et de polarisation souhaitées. En particulier, le premier faisceau laser peut avoir une taille comprise entre un centimètre et cinq centimètres de sorte à être adapté au réflecteur pyramidal 7 susmentionné. Les deux fréquences émises par le laser bifréquence 2 sont espacées de la fréquence de la structure hyperfine de l'atome utilisé dans le capteur 1, par exemple de 6800 MHz pour le rubidium 87.

Le capteur interférométrique 1 comprend en outre des cellules de photo-détection placés 9 dans l'enceinte à vide 6 de sorte à permettre la collection d'une fluorescence de résonance permettant de détecter un signal atomique.

L'enceinte à vide 6 est entourée par un solénoïde généralement désigné 8. Le solénoïde 8 est excitable par partie. Une première partie 8a du solénoïde 8 composé de deux bobines permet de créer un gradient de champ magnétique. Ce gradient de champ magnétique est apte à permettre un piégeage magnétique des atomes dans une zone de capture 10 au sein du volume formé par le réflecteur 7. Une deuxième partie 8b du solénoïde 8 complète le solénoïde 8 pour former un champ magnétique uniforme dans toute l'enceinte à vide 6.

On décrit maintenant le fonctionnement du capteur interférométrique 1 selon l'invention.

En fonctionnement, le capteur interférométrique 1 selon l'invention permet de réaliser une phase de piégeage des atomes, une phase de lancement des atomes et une phase d'interférométrie pour des mesures interférométriques.

La source d'atomes 11 libère des atomes dans la partie supérieure de l'enceinte à vide 6 au niveau du réflecteur 7.

Dans la phase de piégeage, le faisceau laser bifréquence 4 traverse le hublot 5 et pénètre dans l'enceinte à vide 6. Le faisceau laser bifréquence 4 subit des réflexions multiples sur le réflecteur pyramidal 7. Pour un réflecteur 7 pyramidal, du fait des réflexions multiples sur les surfaces du réflecteur, les atomes sont capturés par l'équivalent de six faisceaux lasers correspondant à trois faisceaux contrapropagatifs dans les trois directions de l'espace, ce qui permet de refroidir les atomes libérés par la source d'atomes. Les atomes ainsi capturés par l'équivalent des six faisceaux sont en outre piégés par le champ magnétique à gradient généré par la partie 8a du solénoïde 8. Dès lors, selon l'invention, le réflecteur 7 permet lui-même une capture et un piégeage des atomes de sorte à générer des atomes froids utilisables dans une phase de lancement ultérieure.

En phase de piégeage, le faisceau laser 4 a par exemple un flux d'énergie de 2 mW/cm², soit une puissance de 1 à 25 mW suivant les configurations du réflecteur pyramidal 7.

Le faisceau laser 4 est bifréquence avec deux fréquences asservies précisément en coïncidence avec une raie atomique. Les deux fréquences peuvent être mélangées avec la même polarisation ou des polarisations orthogonales et sont séparées d'une valeur proche de l'écart en fréquence de la structure hyperfine de l'atome considéré.

Le gradient de champ magnétique généré par la partie 8a du solénoïde 8 est compris entre 10 et 20 gauss/cm en phase de piégeage.

En phase de lancement, la source laser peut être éteinte ou allumée pour aider au lancement. Dans une configuration verticale comme celle illustrée FIG. 1, la gravité joue le rôle de force de lancement lorsque la source laser 2 est éteinte. Dans d'autres configurations, le champ magnétique constant généré par la partie 8b du solénoïde 8 permet de réaliser une force de lancement tout en conservant la source laser 2 allumée. Dans ce cas, le champ magnétique constant peut être de l'ordre de 1 gauss.

Une fois les atomes lancés dans la phase de lancement, le capteur interférométrique selon l'invention permet de réaliser des mesures interférométriques dans une phase d'interférométrie. Dans cette phase, le réglage du laser est différent de celui dans la phase de lancement. La taille du faisceau laser 4 est supérieure à la taille de l'échantillon d'atomes et le flux d'énergie du laser est de l'ordre de 100 mW/cm². Les deux fréquences du faisceau laser bifréquence Raman 4 sont mélangées avec des polarisations par exemple orthogonales et sont séparées d'une valeur proche de l'écart en fréquence de la structure hyperfine de l'atome considéré. Des polarisations non orthogonales peuvent toutefois être utilisées, notamment en mode de mesure de gravité. Les deux fréquences sont asservies en phase, c'est-à-dire que l'erreur de fréquence relative est telle que l'erreur de phase induite pendant le temps de mesure est inférieure à un radian.

Le gradient de champ magnétique généré est nul de sorte à ne plus piéger les atomes dans la zone de capture 10 au niveau du réflecteur 7, et le champ magnétique constant généré par la partie 8b du solénoïde 8 est de l'ordre de 100 mGauss sur la trajectoire des atomes.

De façon connue en soi dans le domaine de l'interférométrie atomique, un premier faisceau laser bifréquence Raman et un deuxième faisceau laser bifréquence Raman se propageant dans des directions différentes permettent obtenir des franges d'interférence atomiques à partir du lancement des atomes froids. Ce principe de l'interférométrie atomique est par exemple décrit dans la demande US 5,274,232, dans la thèse susmentionnée « Caractérisation d'un capteur inertiel à atomes froids » de Florence YVER LEDUC, 2004, dans la demande FR-A-2848296 ou dans publication la référence « Six-Axis Inertial Sensor Using Cold-Atom Interferometry précitée ».

De façon générale, selon l'invention, le faisceau laser bifréquence Raman 4 est rétroréfléchi sur le réflecteur 7 de sorte à obtenir un deuxième faisceau laser bifréquence Raman se propageant dans une direction opposée. Des franges d'interférence sont alors obtenues dans la phase interférométriques grâce au capteur interférométrique 1 selon l'invention. Les cellules de photo-détection 9 permettent de collecter la fluorescence de résonance des atomes utilisée pour détecter le signal atomique.

Dès lors, selon l'invention, la forme pyramidale du réflecteur 7 permet d'une part une capture des atomes lors de la phase de piégeage et de refroidissement des atomes grâce aux réflexions multiples sur la surface du réflecteur, et d'autre part une réflexion du faisceau laser bifréquence Raman 4 pour générer le deuxième faisceau laser bifréquence Raman utilisé lors de la phase interférométrique dans une configuration rétroréfléchie.

L'utilisation d'un même réflecteur pour réaliser ces deux fonctions d'un capteur interférométrique a alors l'avantage d'améliorer la compacité du capteur interférométrique,

On décrit ci-dessous plus en détail le principe de la détection des atomes.

Lors de la détection des atomes, après l'interrogation, la première fréquence du faisceau laser est accordée sur la transition cyclante, par exemple F=2 vers F=3 pour le rubidium 87, pour détecter par fluorescence les atomes dans l'état F=2. Si la normalisation du signal atomique est nécessaire, l'utilisation de la seconde fréquence du faisceau laser, accordé pour repomper les atomes, permet de détecter les atomes initialement dans F=1, et qui sont donc repompés dans F=2 pour la détection.

Deux méthodes peuvent être utilisées.

La première consiste à séparer spatialement les deux nuages F=1 et F=2. Dans ce cas, une première impulsion laser permet d'arrêter les atomes dans F=2, laissant les atomes dans F=1 continuer leur chute. Lorsque les deux nuages sont séparés spatialement, une seconde impulsion laser avec le laser repompeur permet de détecter simultanément la fluorescence des deux nuages en les imageant sur deux détecteurs différents.

La seconde méthode est une détection à l'aide du même détecteur, mais séparée dans le temps. Dans ce cas, une première impulsion permet de détecter la fluorescence des atomes dans F=+2, puis en ajoutant le laser repompeur, on peut mesurer la somme de la fluorescence dans les deux niveaux. La hauteur de la zone de détection peut alors être réduite à 10 millimètres.

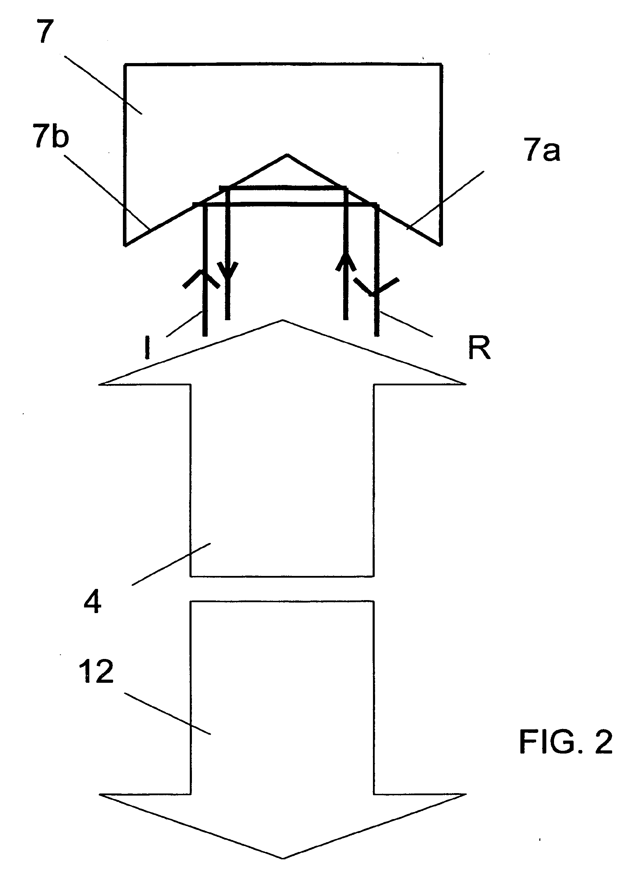

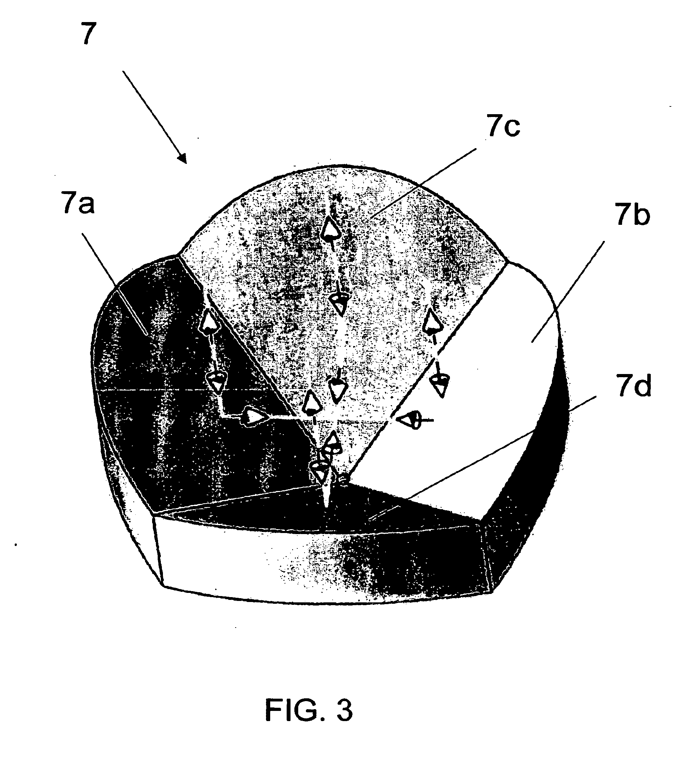

En référence aux FIG. 2 et FIG. 3, on décrit plus en détail le principe des réflexions multiples au niveau du réflecteur 7 permettant à la fois de capturer les atomes et de générer un faisceau Raman rétroréfléchi pour réaliser des mesures interférométriques.

Sur la FIG. 2, le réflecteur pyramidal 7 est illustré en coupe. Un tel réflecteur pyramidal 7 est par exemple un coin de cube. De façon géométrique, on peut considérer que, lorsque le faisceau laser généralement désigné par la référence 4 arrive sur le réflecteur 7, un faisceau incident I est réfléchi une première fois sur la face 7b, et une deuxième fois sur la face opposée 7a, de sorte que le faisceau réfléchi R en sortie du réflecteur 7 a une direction opposée au faisceau incident. Le faisceau réfléchi R a également une polarisation identique à celle du faisceau incident I. Ainsi, si le faisceau incident I est polarisé de façon circulaire droite, le faisceau réfléchi R est polarisé de façon circulaire droite, mais se propage dans un sens opposé.

De la sorte, le faisceau réfléchi, généralement référencé 12 a une polarisation identique à celle du faisceau incident 4, ce qui permet l'obtention de franges d'interférences atomiques dans un capteur interférométrique.

La FIG. 3 est une vue en perspective du réflecteur 7 sur laquelle sont illustrées les faces opposées 7a et 7b de la FIG. 2, et deux autres faces opposées 7c et 7d. Sur cette FIG. 3, on comprend que les réflexions multiples du faisceau laser 4 permettent d'une part d'obtenir un faisceau Raman rétroréfléchi 12, mais également de capturer les atomes dans le volume formé par le réflecteur pyramidal 7. En effet, les réflexions multiples génèrent des faisceaux contrapropagatifs qui assurent cette capture.

On décrit maintenant des variantes du capteur interférométrique selon l'invention.

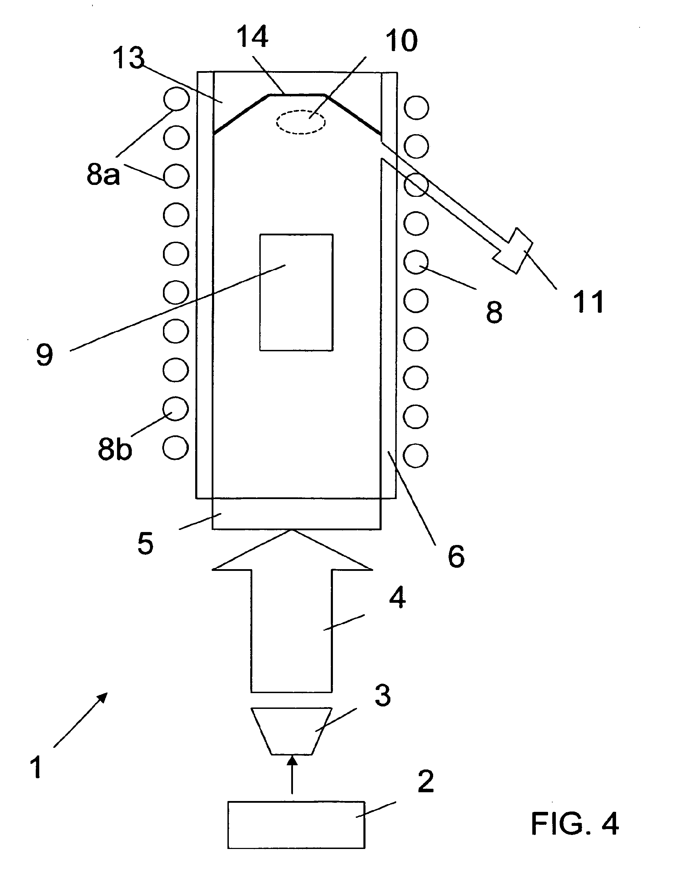

Illustré FIG. 4, un capteur interférométrique 1 selon un mode de réalisation de l'invention comprend tous les éléments techniques décrits en référence à la FIG. 1 avec un réflecteur 7 structurellement différent.

Sur la FIG. 4, le capteur interférométrique 1 comprend un réflecteur 13 ayant une forme de pyramide tronquée dans sa partie supérieure. La partie supérieure 14 du réflecteur est donc plate au centre du réflecteur alors que les parois latérales du réflecteur sont inclinées par rapport à cette partie centrale 14.

Dans ce mode de réalisation, la partie supérieure réfléchissante 14 est traitée par exemple avec une lame lambda sur quatre ou un traitement métallique de sorte à permettre un retournement de polarisation lors de la réflexion du faisceau Raman sur cette partie.

Comme pour le réflecteur 7 décrit en référence aux figures 1, 2 et 3, le réflecteur 13 permet de réaliser une fonction de capture des atomes pour leur refroidissement et une fonction de réflexion du premier faisceau Raman pour générer le deuxième faisceau Raman nécessaire pour les mesures interférométriques.

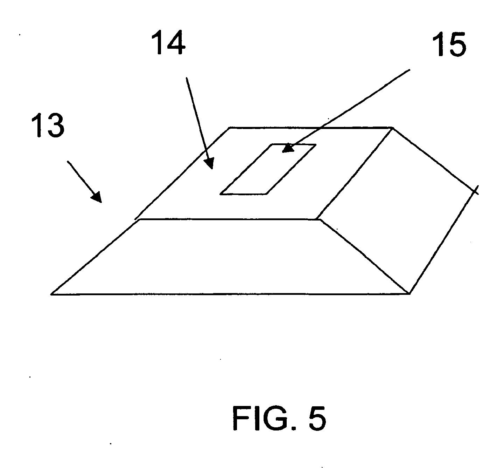

Comme illustré FIG. 5, dans ce mode de réalisation, il est possible de positionner une puce à atomes 15 sur une ou plusieurs des parties plates du réflecteur en forme de pyramide tronquée 13 comme par exemple la partie supérieure 14. Une telle puce à atomes est agencée pour piéger les atomes et pour créer un condensat de Bose Einstein.

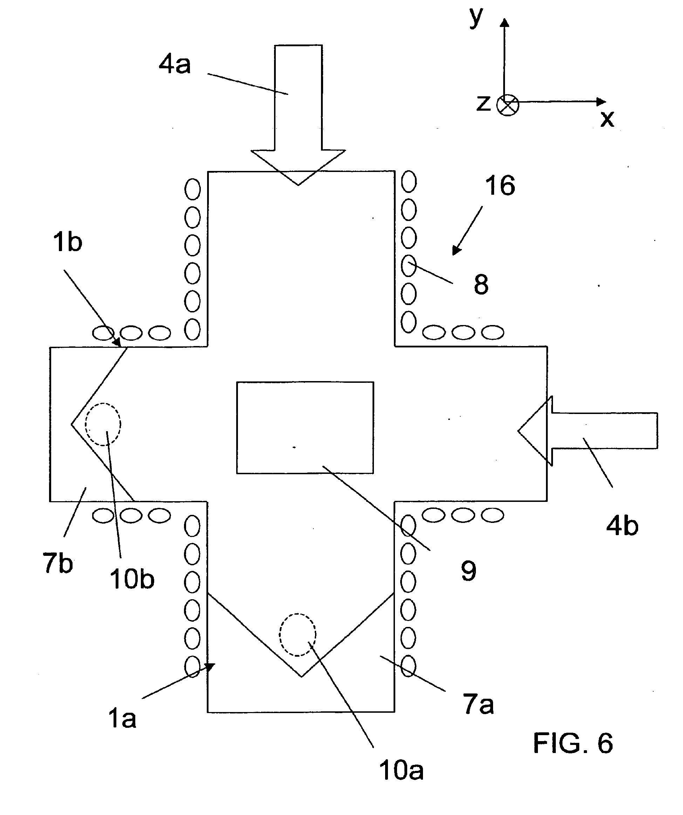

On décrit maintenant, en référence à la FIG. 6, des modes de réalisation d'un système multi-axes comprenant un capteur interférométrique tel que précédemment décrit.

Illustré FIG. 6, un système 16 selon un mode de réalisation de l'invention comprend deux capteurs interférométriques 1a et 1b agencés orthogonalement et couplés. Les capteurs interférométriques peuvent être tels que décrit en référence à la FIG. 1, mais également tels que décrits en référence à la FIG. 4 avec un réflecteur tronqué dans sa partie supérieure.

De la sorte, il est possible d'établir des séquences d'impulsions laser offrant un accès à plusieurs grandeurs inertielles successivement, notamment en accélération et en rotation.

Le système 16 selon l'invention comprend un capteur interférométrique 1a couplé à un capteur interférométrique 1b, les deux capteurs étant agencés de préférence orthogonalement.

Le capteur interférométrique 1a comprend un réflecteur 7a susceptible de réfléchir, par réflexions multiples, un faisceau Raman 4a de sorte à piéger des atomes dans un piège 10a et à générer un deuxième faisceau Raman pour réaliser les mesures interférométriques.

De la même façon, le capteur interférométrique 1b comprend un réflecteur 7b susceptible de réfléchir, par réflexions multiples, un faisceau Raman 4b de sorte à piéger des atomes dans un piège 10b et à générer un deuxième faisceau Raman pour réaliser les mesures interférométriques.

Les mesures interférométriques sont réalisées grâce à des moyens de détection 9 positionnés à l'intersection des trajets des faisceaux laser 4a et 4b.

Le système 1 est entouré par des bobines 8 agencés pour générer un champ magnétique ayant une partie en gradient pour le piégeage des atomes au niveau des zones de capture 10a et 10b, et une partie constante.

En fonctionnement, les mesures à l'aide du laser 4a et des atomes froids issus de la zone de capture 10a permettent un accès à l'accélération selon la direction x de l'interféromètre 1a et les mesures à l'aide du laser 4b et des atomes froids issus de la zone de capture 10b permettent un accès à l'accélération selon la direction y de l'interféromètre 1 b.

En outre, les mesures à l'aide du laser 4a et des atomes froids issus de la zone de capture 10b permettent un accès à la vitesse de rotation selon l'axe z. De la même façon, les mesures à l'aide du laser 4b et des atomes froids issus de la zone de capture 10a permettent un accès à la vitesse de rotation selon l'axe z.

Dans un autre mode de réalisation, il est également possible de réaliser un système interférométrique à l'aide de trois capteurs tels que précédemment décrits montés perpendiculairement dans les trois directions de l'espace. Dans ce cas, on réalise une base inertielle mesurant six grandeurs inertielles correspondant à trois rotations et trois accélérations.

Les capteurs interférométriques précédemment décrits peuvent être utilisés pour former des gravimètres, des accéléromètres ou des gyromètres à onde de matière. Les dispositifs ainsi obtenus ont l'avantage d'être compact grâce à l'économie de plusieurs réflecteurs et/ou de plusieurs sources laser.

## Revendications

1. Capteur interférométrique à atomes froids (1, 1a, 1b) comprenant :
- une source d'atomes (11);
- un laser bifréquence (2) apte à générer un premier faisceau laser bifréquence Raman (4, 4a, 4b) ;
- un réflecteur (7, 13) agencé pour réfléchir le premier faisceau laser bifréquence Raman de sorte à générer un deuxième faisceau laser bifréquence Raman (12), le premier faisceau laser et le deuxième faisceau laser se propageant dans des directions différentes pour obtenir des franges d'interférence atomiques à partir d'un lancement d'atomes froids obtenus à partir de la source d'atomes ;
**caractérisé en ce que** le réflecteur (7, 13) est agencé en outre pour permettre des réflexions multiples du premier faisceau (4) sur des surfaces (7a, 7b, 7c, 7d, 14) du réflecteur de sorte que le premier faisceau et ses réflexions multiples permettent de capturer les atomes issus de la source d'atomes de manière à obtenir les atomes froids.

2. Capteur interférométrique à atomes froids selon la revendication 1, dans lequel le réflecteur est agencé de sorte que le premier faisceau et les réflexions du premier faisceau sur les surfaces du réflecteur constituent des paires de faisceaux contrapropageants pour capturer les atomes de sorte à obtenir les atomes froids.

3. Capteur interférométrique à atomes froids selon la revendication 2, dans lequel le réflecteur est agencé de sorte que le premier faisceau et les réflexions du premier faisceau sur les surfaces du réflecteur constituent trois paires de faisceaux contrapropageants.

4. Capteur interférométrique à atomes froids selon l'une des revendications 1 à 3, dans lequel le réflecteur est un réflecteur convexe pour que le premier faisceau et les réflexions du premier faisceau sur le réflecteur permettent de capturer les atomes dans le volume du réflecteur.

5. Capteur interférométrique à atomes froids selon l'une des revendications 1 à 4, dans lequel le réflecteur a une forme conique ou tronconique de sorte que le premier faisceau et les réflexions du premier faisceau sur le réflecteur permettent de capturer les atomes dans le volume formé par le réflecteur.

6. Capteur interférométrique à atomes froids selon la revendication 5, dans lequel le réflecteur a une forme pyramidale à section carrée ou pyramidale tronquée de sorte que le premier faisceau et les réflexions du premier faisceau sur les surfaces du réflecteur constituent trois paires de faisceaux contrapropageants pour capturer les atomes dans le volume formé par le réflecteur.

7. Capteur interférométrique selon l'une des revendications précédentes, dans lequel le réflecteur est agencé pour que le deuxième faisceau laser se propage dans une direction opposée à la direction de propagation du premier faisceau.

8. Capteur interférométrique selon la revendication précédente, dans lequel le réflecteur est agencé pour que le deuxième faisceau ait une polarisation identique à la polarisation du premier faisceau.

9. Capteur interférométrique selon la revendication 8, dans lequel le réflecteur a une forme tronconique ou pyramidale tronquée avec une surface plane (14) perpendiculaire à la direction du premier faisceau, la surface plane (14) étant traitée de sorte que le faisceau réfléchi sur la surface plane ait une polarisation identique à la polarisation du premier faisceau.

10. Capteur interférométrique selon la revendication précédente, dans lequel la source d'atomes comprend une puce atomique (15) pourvue sur une des surface plane (14) du réflecteur pour créer un nuage ultra-froid piégé magnétiquement.

11. Capteur interférométrique à atomes froids selon l'une des revendications précédentes, dans lequel le capteur comprend en outre des moyens magnétiques (8, 8a, 8b) agencés pour piéger magnéto-optiquement les atomes froids, les moyens magnétiques étant agencés par rapport au réflecteur de sorte que les atomes froids soient piégés dans le volume du réflecteur.

12. Capteur interférométrique à atomes froids selon la revendication précédente, dans lequel les moyens magnétiques sont en outre agencés pour générer un champ magnétique constant de sorte à réaliser le lancement des atomes froids pour obtenir les franges d'interférence atomiques.

13. Capteur interférométrique à atomes froids selon l'une des revendications précédentes, dans lequel le lancement des atomes froids pour obtenir les franges d'interférence atomiques est susceptible d'être réalisé par gravité.

14. Capteur interférométrique à atomes froids selon l'une des revendications précédentes, dans lequel la source d'atomes est apte à générer une vapeur d'atomes par au moins une des méthodes suivantes :
- la désorption par chaleur ;
- la lumière ;
- le contrôle de la température d'un point froid.

15. Capteur interférométrique à atomes froids selon l'une des revendications précédentes, comprenant en outre une enceinte sous vide (6), le réflecteur étant positionnés dans l'enceinte sous vide, et le capteur comprenant en outre des moyens de transmission (5) agencés pour faire entrer le premier faisceau laser dans l'enceinte sous vide.

## Claims

1. A cold-atom interferometry sensor (1, 1a, 1b) comprising:
- a source of atoms (11);
- a dual-frequency laser (2) able to generate a first Raman dual-frequency laser beam (4, 4a, 4b);
- a reflector (7, 13) arranged to reflect the first Raman dual-frequency laser beam so as to generate a second Raman dual-frequency laser beam (12), the first laser beam and the second laser beam propagating in different directions in order to obtain atomic interference fringes from an emission of cold atoms obtained from the source of atoms;
**characterized in that** the reflector (7, 13) is also arranged to enable multiple reflections of the first beam (4) on surfaces (7a, 7b, 7c, 7d, 14) of the reflector so that the first beam and its multiple reflections make it possible to capture the atoms originated from the atom source so as to obtain the cold atoms.

2. The cold-atom interferometry sensor according to claim 1, in which the reflector is arranged so that the first beam and the reflections of the first beam on the surfaces of the reflector constitute pairs of counterpropagating beams for capturing atoms so as to obtain cold atoms.

3. The cold-atom interferometry sensor according to claim 2, in which the reflector is arranged so that the first beam and the reflections of the first beam on the surfaces of the reflector constitute three pairs of counterpropagating beams.

4. The cold-atom interferometry sensor according to any one of claims 1 to 3, in which the reflector is a convex reflector so that the first beam and the reflections of the first beam on the reflector make it possible to capture the atoms in the volume of the reflector.

5. The cold-atom interferometry sensor according to any one of claims 1 to 4, in which the reflector has a conical or truncated conical shape so that the first beam and the reflections of the first beam on the reflector make it possible to capture the atoms in the volume formed by the reflector.

6. The cold-atom interferometry sensor according to claim 5, in which the reflector has a pyramidal shape with a square or truncated pyramidal cross section so that the first beam and the reflections of the first beam on the surfaces of the reflector constitute three pairs of counterpropagating beams for capturing the atoms in the volume formed by the reflector.

7. The interferometry sensor according to any one of the previous claims, in which the reflector is arranged so that the second laser beam is propagated in a direction opposite to the propagation direction of the first beam.

8. The interferometry sensor according to the previous claim, in which the reflector is arranged so that the second beam has a polarization identical to the polarization of the first beam.

9. The interferometry sensor according to claim 8, in which the reflector has a truncated conical or truncated pyramidal shape with a flat surface (14) perpendicular to the direction of the first beam, the flat surface (14) being treated so that the beam reflected on the flat surface has polarization identical to the polarization of the first beam.

10. The interferometry sensor according to the preceding claim, in which the atom source comprises an atom chip (15) provided on one of the flat surfaces (14) of the reflector in order to create a magnetically trapped ultra-cold cloud.

11. The cold-atom interferometry sensor according to any one of the previous claims, in which the sensor further comprises magnetic means (8, 8a, 8b) arranged to trap the cold atoms magneto-optically, the magnetic means being arranged with respect to the reflector so that the cold atoms are trapped in the volume of the reflector.

12. The cold-atom interferometry sensor according to the previous claim, in which the magnetic means are also arranged to generate a constant magnetic field so as to perform the emission of cold atoms in order to obtain the atomic interference fringes.

13. The cold-atom interferometry sensor according to any one of the previous claims, in which the emission of cold atoms to obtain atomic interference fringes is able to be performed by gravity.

14. The cold-atom interferometry sensor according to any one of the previous claims, in which the atom source is able to generate an atom vapor by at least one of the following methods:
- heat desorption;
- light;
- control of the temperature of a cold spot.

15. The cold-atom interferometry sensor according to any one of the previous claims, further comprising a vacuum chamber (6), the reflector being positioned in the vacuum chamber, the sensor further comprising transmission means (5) arranged to let the first laser beam enter the vacuum chamber.

## Patentansprüche

1. Sensor für die Interferometrie mit kalten Atomen (1, 1a, 1 b), umfassend:
- einer Atomquelle (11),
- einem Zweifrequenzlaser (2), der geeignet ist, einen ersten Raman-Zweifrequenz-Laserstrahl (4, 4a, 4b) zu erzeugen,
- einem Reflektor (7, 13), der angeordnet ist, um den ersten Raman-Zweifrequenz-Laserstrahl derart zu reflektieren, dass ein zweiter Raman-Zweifrequenz-Laserstrahl (12) erzeugt wird, wobei der erste Laserstrahl und der zweite Laserstrahl sich in unterschiedliche Richtungen ausbreiten, um atomare Interferenzstreifen durch ein Emittieren von aus der Atomquelle gewonnenen kalten Atomen zu erzielen,
**dadurch gekennzeichnet, dass** der Reflektor (7, 13) ferner angeordnet ist, um Mehrfachreflexionen des ersten Strahls (4) an Flächen (7a, 7b, 7c, 7d, 14) des Reflektors so zu ermöglichen, dass der erste Strahl und seine Mehrfachreflexionen das Einfangen der Atome aus der Atomquelle so ermöglichen, dass die kalten Atome gewonnen werden.

2. Sensor für die Interferometrie mit kalten Atomen nach Anspruch 1, bei dem der Reflektor derart angeordnet ist, dass der erste Strahl und die Reflexionen des ersten Strahls an den Flächen des Reflektors Paare von sich entgegen gerichtet ausbreitenden Strahlen bilden, um die Atome einzufangen, so dass die kalten Atome gewonnen werden.

3. Sensor für die Interferometrie mit kalten Atomen nach Anspruch 2, bei dem der Reflektor derart angeordnet ist, dass der erste Strahl und die Reflexionen des ersten Strahls an den Flächen des Reflektors drei Paare von sich entgegen gerichtet ausbreitenden Strahlen bilden.

4. Sensor für die Interferometrie mit kalten Atomen nach einem der Ansprüche 1 bis 3, bei dem der Reflektor ein konvexer Reflektor ist, damit der erste Strahl und die Reflexionen des ersten Strahls an dem Reflektor das Einfangen der Atome in dem Volumen des Reflektors ermöglichen.

5. Sensor für die Interferometrie mit kalten Atomen nach einem der Ansprüche 1 bis 4, bei dem der Reflektor kegel- bzw. kegelstumpfförmig ist, damit der erste Strahl und die Reflexionen des ersten Strahls an dem Reflektor das Einfangen der Atome in dem von dem Reflektor begrenzten Volumen ermöglichen.

6. Sensor für die Interferometrie mit kalten Atomen nach Anspruch 5, bei dem der Reflektor die Form einer Pyramide mit quadratischem Querschnitt oder eines Pyramidenstumpfes aufweist, so dass der erste Strahl und die Reflexionen des ersten Strahls an den Flächen des Reflektors drei Paare von sich entgegen gerichtet ausbreitenden Strahlen bilden, um die Atome in dem von dem Reflektor begrenzten Volumen einzufangen.

7. Interferometrischer Sensor nach einem der vorhergehenden Ansprüche, bei dem der Reflektor angeordnet ist, damit der zweite Laserstrahl sich in eine Richtung entgegengesetzt zu der Richtung der Ausbreitung des ersten Strahls ausbreitet.

8. Interferometrischer Sensor nach dem vorhergehenden Anspruch, bei dem der Reflektor angeordnet ist, damit der zweite Strahl mit eine Polarisation aufweist, die mit der Polarisation des ersten Strahls übereinstimmt.

9. Interferometrischer Sensor nach Anspruch 8, bei dem der Reflektor die Form eines Kegelstumpfes bzw. eines Pyramidenstumpfes mit einer senkrecht zu der Richtung des ersten Strahls verlaufenden ebenen Fläche (14) aufweist, wobei die ebene Fläche (14) derart behandelt ist, dass der an der ebenen Fläche reflektierte Strahl eine Polarisation aufweist, die mit der Polarisation des ersten Strahls übereinstimmt.

10. Interferometrischer Sensor nach dem vorhergehenden Anspruch, bei dem die Atomquelle einen Atomchip (15) auf einer der ebenen Flächen (14) des Reflektors umfasst, um eine magnetisch gefangene ultrakalte Wolke zu erzeugen.

11. Sensor für die Interferometrie mit kalten Atomen nach einem der vorhergehenden Ansprüche, bei dem der Sensor ferner magnetische Mittel (8, 8a, 8b) umfasst, die angeordnet sind, um die kalten Atome magneto-optisch einzufangen, wobei die magnetischen Mittel in Bezug auf den Reflektor derart angeordnet sind, dass die kalten Atome in dem Volumen des Reflektors gefangen werden.

12. Sensor für die Interferometrie mit kalten Atomen nach dem vorhergehenden Anspruch, bei dem die magnetischen Mittel ferner angeordnet sind, um ein Magnetgleichfeld zu erzeugen, so dass das Emittieren der kalten Atome zum Erzielen der atomaren Interferenzstreifen bewirkt wird.

13. Sensor für die Interferometrie mit kalten Atomen nach einem der vorhergehenden Ansprüche, bei dem das Emittieren der kalten Atome zum Erzielen der atomaren Interferenzstreifen durch die Schwerkraft bewirkt werden kann.

14. Sensor für die Interferometrie mit kalten Atomen nach einem der vorhergehenden Ansprüche, bei dem die Atomquelle geeignet ist, durch mindestens eines der folgenden Verfahren einen Atomdampf zu erzeugen:
- thermische Desorption,
- Licht,
- Kontrolle der Temperatur eines kalten Punkts.

15. Sensor für die Interferometrie mit kalten Atomen nach einem der vorhergehenden Ansprüche, umfassend ferner eine Vakuumkammer (6), wobei der Reflektor in der Vakuumkammer angeordnet ist und der Sensor ferner Übertragungsmittel (5) umfasst, die angeordnet sind, damit der erste Laserstrahl in die Vakuumkammer eindringt.
